# EUROPÄISCHE PATENTSCHRIFT

(11) **EP 2 460 206 B1**
(45) Veröffentlichungstag und Bekanntmachung des Hinweises auf die Patenterteilung: **26.03.2014**
(21) Anmeldenummer: 10730720.9
(22) Anmeldetag: 03.07.2010
(51) Int. Cl.: H01M 2/02, H01M 2/26, H01M 10/04, H01M 10/0525, H01M 10/0585

(54) **BATTERIE MIT EINEM STAPEL VON BIPOLAREN BATTERIEEINZELZELLEN**
BATTERY WITH A STACK OF BIPOLAR INDIVIDUAL BATTERY CELLS
BATTERIE COMPRENANT UN EMPILEMENT D'ÉLÉMENTS DE BATTERIE UNITAIRES BIPOLAIRES

(30) Priorität: 31.07.2009 DE 102009035495
(43) Veröffentlichungstag der Anmeldung: 06.06.2012
(73) Patentinhaber: Daimler AG, 70327 Stuttgart (DE)
(72) Erfinder: SCHRÖTER, Dirk, 71364 Winnenden (DE); MEINTSCHEL, Jens, 02994 Bernsdorf (DE); KAUFMANN, Rainer, 70597 Stuttgart (DE); ERTLE, Martin, 73453 Abtsgmünd (DE); HOHENTHANNER, Claus-Rupert, 63457 Hanau (DE); KAISER, Jörg, 76344 Eggenstein (DE); BRASSE, Claudia, 40667 Meerbusch (DE)
(74) Vertreter: JENSEN & SON
(86) Internationale Anmeldenummer: PCT/EP2010/004038
(87) Internationale Veröffentlichungsnummer: WO 2011/012202

(56) Entgegenhaltungen:
- WO-A1-2009/018942
- DE-A1-102007 063 180
- US-A1- 2006 088 761

## Beschreibung

Die Erfindung betrifft eine Batterie, mit einem Stapel von bipolaren Batterieeinzelzellen nach der im Oberbegriff von Anspruch 1 näher definierten Art.

Aus dem allgemeinen Stand der Technik sind Batterien bekannt, welche durch einen Stapel von bipolaren Batterieeinzelzellen gebildet sind. Die Zellen werden dabei aufeinander gestapelt und typischerweise miteinander verspannt, sodass auf der einen Seite des Stapels der Batterieeinzelzellen der eine Batteriepol zu liegen kommt, während auf der anderen Seite des Stapels der Batterieeinzelzellen der andere Batteriepol liegt. Derartige Batterieeinzelzellen werden beispielsweise in der älteren deutschen Anmeldung mit dem Aktenzeichen DE 10 2007 063 181.4 beschrieben. Die Batterieeinzelzellen sind dabei als so genannte Rahmenflachzellen ausgebildet, welche zwei metallische Hüllbleche aufweisen. Die metallischen Hüllbleche sind durch einen isolierenden Rahmen elektrisch voneinander getrennt. Sie dienen einerseits als die Pole der Batterieeinzelzelle, andererseits als Wärmeleitbleche, welche in der Batterie entstehende Abwärme nach außerhalb der Batterieeinzelzelle ableiten. Dort können die metallischen Hüllbleche beispielsweise mit einer Kühleinrichtung in Verbindung stehen, welche typischerweise von einer Kühlflüssigkeit oder dem Klimakühlmittel einer Klimaanlage aktiv gekühlt wird.

Im Inneren der Batterieeinzelzelle, also zwischen den Hüllblechen und umgeben von dem elektrisch isolierenden Rahmen, sind die elektrochemisch wirksamen Materialien angeordnet. Diese bestehen typischerweise aus einem Stapel von Elektroden. Dieser Elektrodenstapel weist Anoden- und Kathodenfolien auf, welche mit einem dazwischen angeordneten elektrisch isolierenden Separator voneinander getrennt, abwechselnd übereinander gestapelt sind. An den Rändern der metallischen Folien stehen auf der einen Seite die Anodenfolien über, auf der anderen Seite die Kathodenfolien. Diese in der oben genannten Anmeldung als Stromfahnen bezeichneten Bereiche sind dann entsprechend miteinander verbunden. Dies kann beispielsweise durch eine Schweißung erfolgen, wie es in der oben genannten Schrift beschrieben wird. Außerdem sind diese Bereiche als Anschlussbereiche des Elektrodenstapels mit dem jeweiligen Hüllblech elektrisch verbunden. Auch dies kann gemäß der genannten Anmeldung durch Verschweißen erfolgen. Die Batterieeinzelzelle wird dann über den Rahmen und die beiden Hüllbleche entsprechend komplettiert und fertig montiert. Dabei wird die Batterieeinzelzelle dicht gegenüber der Umgebung verschlossen. In das Innere des Rahmens wird dann ein entsprechender Elektrolyt eingefüllt, sodass dieser zusammen mit dem Stapel der Elektroden den chemisch aktiven Teil der Batterieeinzelzelle bildet.

Bei Lithium-lonen-Batterien bestehen die Anoden- bzw. Kathodenfolien typischerweise aus Aluminium bzw. Kupferfolien und als Elektrolyt wird typischerweise ein flüssiger Lithium-lonen enthaltender Elektrolyt eingesetzt.

Um nun die jeweiligen Elektrodenfolien mit dem jeweiligen Hüllblech zu verbinden, kommt also ein geeignetes Schweißverfahren zum Einsatz. Nachteilig bei diesem Verschweißen der Elektrodenfolien bzw. ihrer Anschlussbereiche mit den jeweiligen Hüllblechen ist es, dass im Bereich der Schweißstellen typischerweise Materialaufwerfungen bzw. -erhebungen im Bereich der Schweißstelle auftreten, welche dann ein planes Anliegen des Hüllblechs der einen Batterieeinzelzelle an dem Hüllblech der benachbarten Batterieeinzelzelle verhindern. Auch auf der Seite des Elektrodenstapels treten entsprechende Unebenheiten im Material auf. Da dieser Aufbau jedoch durch den mit Elektrolyt gefüllten Bereich der Batterieeinzelzelle von dem gegenüberliegenden Hüllblech beabstandet ist, spielt dies hier keine Rolle.

Um nun ein planes Anliegen der Hüllbleche von benachbarten Batterieeinzelzellen auch im Bereich der Schweißstellen zu erreichen, ist eine entsprechende Nachbearbeitung notwendig, welche die Produktion aufwendig und teuer macht. Würde man die überstehenden Bereiche der Schweißstellen auf den Hüllblechen einfach belassen, so käme es zu einem entsprechenden unkontrollierten Luftspalt an dieser Stelle sowie zu punktuellen Berührungen der Hüllbleche mit dem aufgeworfenen Material der Schweißstellen. Dies kann bei den vergleichsweise hohen Spannungen in dem Stapel der Batterieeinzelzellen bis hin zu einem Funkenschlag in diesem Bereich führen. Dies gilt es unbedingt zu vermeiden, um eine entsprechende Schädigung des Aufbaus zu verhindern.

Es ist daher die Aufgabe der hier vorliegenden Erfindung, eine Batterie mit einem Stapel von bipolaren Batterieeinzelzellen anzugeben, welche die oben genannten Nachteile vermeidet, und welche einen Aufbau erlaubt, welcher einfach und kostengünstig zu realisieren ist.

Erfindungsgemäß wird diese Aufgabe durch die im kennzeichnenden Teil von Anspruch 1 genannten Merkmale gelöst. Weitere vorteilhafte Ausgestaltungen der erfindungsgemäßen Lösung ergeben sich dabei aus den restlichen Unteransprüchen.

Erfindungsgemäß ist im Bereich der Schweißstelle das mit dem Elektrodenstapel verschweißte Hüllblech und/oder das gegenüberliegende Hüllblech der benachbarten Batterieeinzelzellen zurückversetzt ausgebildet. Dadurch wird zumindest im Bereich der Schweißstelle ein Abstand zwischen den beiden benachbarten Hüllblechen geschaffen. Diese können im Bereich der Schweißstelle dann nicht mehr aneinander anliegen, sodass auf eine Nachbearbeitung der Schweißstelle verzichtet werden kann, ohne die oben genannten Nachteile befürchten zu müssen. Dabei ist es grundsätzlich möglich, lediglich das mit der Schweißstelle versehene Hüllblech in diesem Bereich zurückzuversetzen und das gegenüberliegende Hüllblech gerade zu lassen, oder umgekehrt. Auch wäre es denkbar, beide Hüllbleche entsprechend zurückzuversetzen.

Dabei spielt es keine Rolle, ob beide der Hüllbleche jeweils mit dem Elektrodenstapel verschweißt sind, was typischerweise der Fall sein wird, oder ob lediglich eines der Hüllbleche mit dem Elektrodenstapel verschweißt ist und das andere Hüllblech in anderer Art und Weise eine elektrische Verbindung zu dem Elektrodenstapel aufweist. Eine erfindungsgemäße Ausgestaltung kann bereits bei einer einzigen Schweißstelle entsprechend eingesetzt werden.

In einer weiteren besonders günstigen Ausgestaltung der Erfindung ist es dabei vorgesehen, dass die Hüllbleche und der Elektrodenstapel über Pressschweißverfahren miteinander verschweißt sind. Insbesondere bei diesem Verfahren, wie beispielsweise Ultraschallschweißen oder Widerstands-Pressschweißen, kommt es zu einem gewissen Einprägen der Elektrodengeometrie in den Bereich der verschweißten Bauteile. Dies kann beispielsweise beim Ultraschallschweißen eine entsprechend geriffelte oder gerändelte Oberfläche der Sonotrode und/oder des Ambosses sein. Diese Pressschweißverfahren bieten im Gegenzug allerdings den Vorteil, dass mit ihnen verschiedene Materialien miteinander verschweißt werden können. Da beispielsweise beim Aufbau der Batterieeinzelzelle mit Lithium-lonen-Zellchemie metallische Hüllbleche, beispielsweise aus eisenbasierten Werkstoffen mit Aluminiumfolien als Anoden bzw. Kupferfolien als Kathoden verschweißt werden müssen, stellt dieser Vorteil der Pressschweißverfahren einen entscheidenden Vorteil bei der Herstellung derartiger Batterieeinzelzellen dar. Somit kann die Fertigung der Batterieeinzelzellen entsprechend vereinfacht werden und die Herstellung der Batterie selbst ist kostengünstiger möglich.

Weitere vorteilhafte Ausgestaltungen der Erfindung ergeben sich aus den restlichen Unteransprüchen und aus den Ausführungsbeispielen, welche nachfolgend anhand der Figuren näher erläutert werden.

Dabei zeigen:
- Fig. 1: eine dreidimensionale Ansicht einer Batterieeinzelzelle gemäß der Erfindung;
- Fig. 2: eine Explosionsdarstellung der Batterieeinzelzelle gemäß Fig. 1;
- Fig. 3: ein vergrößerter Ausschnitt der Darstellung gemäß Fig. 1;
- Fig. 4: eine dreidimensionale Ansicht der Batterieeinzelzelle gemäß Fig. 1 beim Verschweißen eines Hüllbleches mit dem Elektrodenstapel;
- Fig. 5: die Ansicht gemäß Fig. 4 aus einem anderen Blickwinkel;
- Fig. 6: der Amboss der Darstellung in Fig. 4 und Fig. 5 in einer detaillierten Darstellung;
- Fig. 7: eine Schnittdarstellung durch eine erfindungsgemäße Batterieeinzelzelle;
- Fig. 8: eine Schnittdarstellung eines Stapels von erfindungsgemäßen Batterieeinzelzellen;
- Fig. 9: eine dreidimensionale Ansicht analog Fig. 1 mit einem alternativen Schweißverfahren;
- Fig. 10: eine dreidimensionale Darstellung einer erfindungsgemäßen Batterieeinzelzelle in einer alternativen Ausführungsform;
- Fig. 11: eine dreidimensionale Darstellung einer erfindungsgemäßen Batterieeinzelzelle in einer weiteren alternativen Ausführungsform; und
- Fig. 12: eine Schnittdarstellung durch einen Stapel von Batterieeinzelzellen in der Ausführung gemäß Fig. 10 oder Fig. 11.

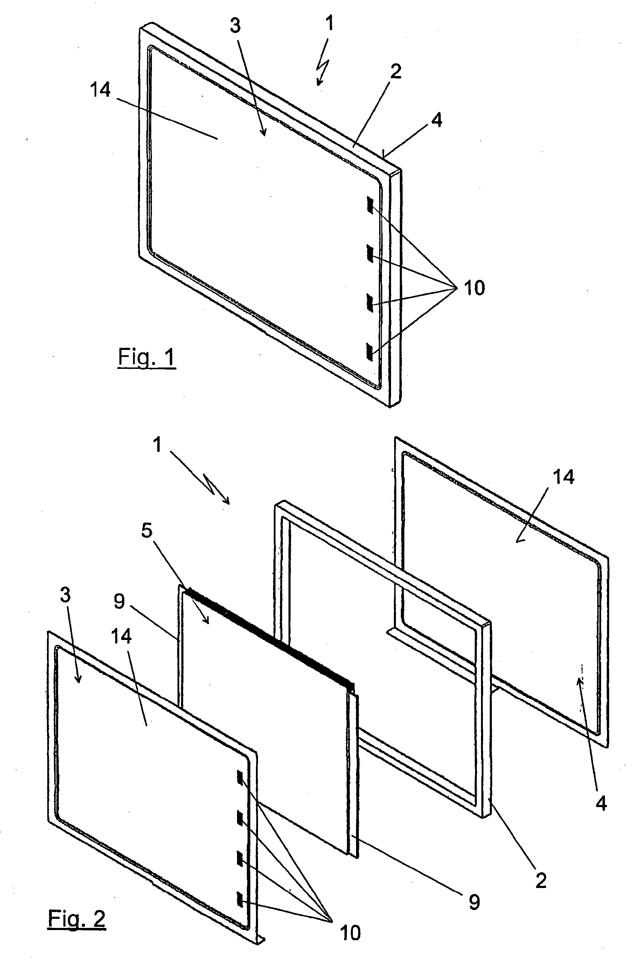

In der Darstellung der Figur 1 ist eine Batterieeinzelzelle 1 in einer dreidimensionalen Darstellung zu erkennen. Sie besteht aus einem elektrisch isolierenden Rahmen 2 sowie einem ersten Hüllblech 3 und einem zweiten auf der gegenüberliegenden Seite des Rahmens 2 angeordneten Hüllblech 4.

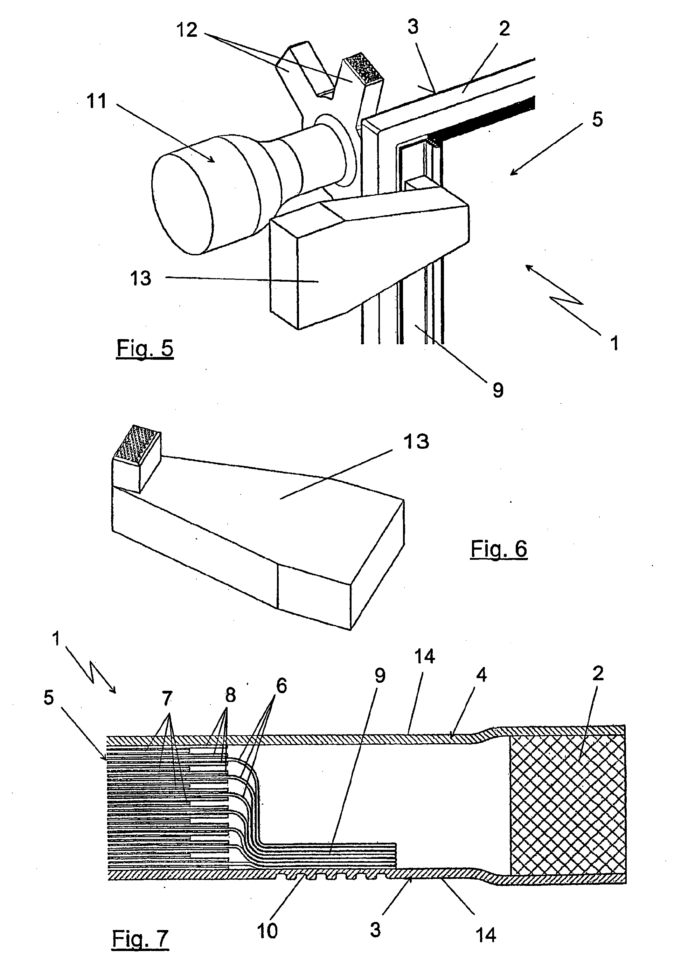

In Figur 2 ist eine Explosionsdarstellung desselben Aufbaus zu erkennen, in welchem neben den beiden Hüllblechen 3, 4 und dem Rahmen 2 außerdem ein Elektrodenstapel 5 zu erkennen ist. Dieser Elektrodenstapel 5 ist aus Anodenfolien 6 und Kathodenfolien 7 mit einem jeweils dazwischen angeordneten Separator 8 gestapelt. Dieser Aufbau ist in der Darstellung der Figur 2 so nicht zu erkennen, kann aber der vergrößerten Schnittdarstellung der Figur 7 entsprechend entnommen werden. Die Anodenfolien 6 und Kathodenfolien 7 sind dabei jeweils abwechselnd zueinander gestapelt, wobei jeweils ein elektrisch isolierender Separator 8, typischerweise ebenfalls in Folienform, zwischen der jeweiligen Anodenfolie 6 und Kathodenfolie 7 angeordnet ist. Auf der einen Seite des Elektrodenstapels 5 sind die Anodenfolien 6 aus diesem herausgeführt, auf der anderen Seite die Kathodenfolien 7. Diese Bereiche bilden dabei jeweils die elektrischen Anschlussbereiche 9, welche auch in Figur 2 wieder zu erkennen sind. Diese elektrischen Anschlussbereiche 9 sind mit dem jeweiligen Hüllblech 3, 4 verschweißt. Dies ist in den Darstellungen der Figuren 1 und 2 im Bereich des ersten Hüllblechs 3, beispielsweise des Anodenblechs, durch die entsprechenden Schweißstellen 10 zu erkennen.

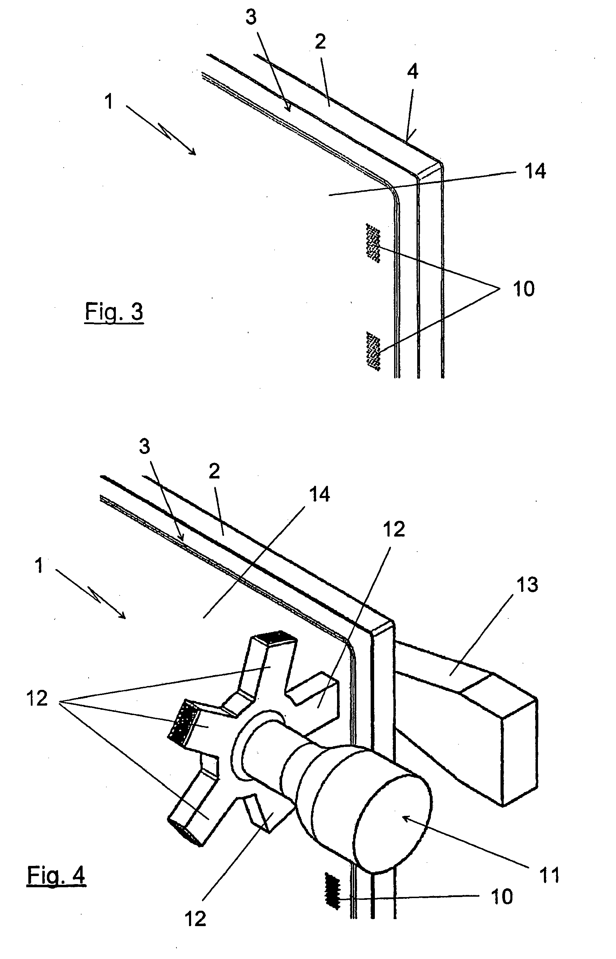

In der vergrößerten Darstellung der Figur 3 sind zwei dieser Schweißstellen 10 nochmals im Detail dargestellt. Die Schweißstellen 10 weisen dabei eine unebene Oberfläche auf. Ihre Oberflächenform wird durch das bevorzugte Schweißverfahren bedingt. Beispielsweise kann zum Verschweißen der elektrischen Anschlussbereiche 9 des Elektrodenstapels 5 mit dem jeweiligen Hüllblech 3, 4 ein Pressschweißverfahren, wie z.B. die Ultraschallschweißung, eingesetzt werden. In den Darstellungen der Figuren 4 und 5 ist ein solches Verschweißen des elektrischen Anschlussbereichs 9 des Elektrodenstapels 5 mit dem ersten Hüllblech 3, welches hier bereits mit dem Rahmen 2 verbunden ist, beispielhaft dargestellt. Dabei ist in Figur 4 die so genannte Sonotrode 11 der Ultraschallschweißvorrichtung zu erkennen. Die Sonotrode 11 auf der einen Seite der zu verschweißenden Bauteile 3, 9 weist in den hier dargestellten Ausführungsbeispielen mehrere Schweißköpfe 12 auf. In dem in Figur 4 dargestellten Ausführungsbeispiel ist einer der Schweißköpfe 12 entsprechend im Einsatz. Er wirkt mit einem Amboss 13 zusammen, welcher auf der anderen Seite der beiden zu verschweißenden Bauteile 3, 9 angeordnet ist. Dies ist in Figur 5 zu erkennen. Nun ist es so, dass die Sonotrode 11 mittels hochfrequentem Ultraschall entsprechend bewegt wird, während die beiden Bauteile 3, 9 zwischen der Sonotrode 11 und dem Amboss 13 eingespannt sind. Durch die hochfrequente Ultraschallbewegung der Sonotrode 11 bzw. ihrer Schweißköpfe 12 kommt es dann zu einer starken Erhitzung der eingespannten Materialien, und damit zu einer Art Reibschweißung. Um nun die benötigte Wärme bestmöglich in die Bauteile 3, 9, welche verschweißt werden sollen, einzutragen, sind Schweißkopf 12 und Amboss 13 mit einer entsprechend rauen Oberfläche versehen. Dies ist in Figur 6 am Beispiel des Amboss 13 nochmals dargestellt.

Der Bereich des Amboss 13, welcher gegenüber dem Schweißkopf 12 der Sonotrode 11 liegt, ist entsprechend aufgeraut und beispielsweise mit einer Verzahnung, einer Rändelung oder dem hier dargestellten Noppenmuster versehen. Dieses Noppenmuster, was auf dem Schweißkopf 12 der Sonotrode 11 vergleichbar ausgebildet sein kann, sorgt nun für eine gute Übertragung der Reibkräfte und damit für eine entsprechende Erwärmung der zu verschweißenden Bauteile 3, 9. Der Vorteil eines derartigen Ultraschallschweißverfahrens liegt, wie auch bei anderen Pressschweißverfahren, darin, dass unterschiedliche Materialien miteinander verschweißt werden können. Beim hier dargestellten Ausführungsbeispiel beispielsweise ein eisenhaltiges Material des ersten Hüllblechs 3 mit dem Aluminium der Anodenfolien.

Nachteilig bei derartigen Pressschweißverfahren ist andererseits, dass die benötigte Oberflächenstruktur des Amboss 13 bzw. der Sonotrode 11 sich entsprechend in den miteinander verschweißten Bauteilen 3, 9 abdrückt und für eine ungleichmäßige Oberfläche und Materialaufwerfungen sorgt. Dies ist aus den vorhergehenden Figuren bereits ersichtlich, da die Schweißstellen 10 auf den Bauteilen entsprechend zu erkennen sind. In der Schnittdarstellung der Figur 7 ist dies nochmals schematisch dargestellt. Dabei wurde lediglich die für die Erfindung relevante Verformung im Bereich des ersten Hüllblechs 3 dargestellt. Eine vergleichbare Verformung wird auch auf der dem Hüllblech 3 gegenüberliegenden Seite des Anschlussbereichs 9 auftreten. Da diese in den Bereich der Batterieeinzelzelle 1 ragt, welcher ohne Funktion bzw. von dem Elektrolyt gefüllt ist, spielt dies jedoch keine Rolle, sodass auf eine entsprechende Darstellung in der Figur 7 verzichtet wurde. Die Schnittdarstellung in der Figur 7 zeigt neben dem Materialaufwurf im Bereich der Schweißstelle 10 außerdem noch mal den Elektrodenstapel 5 mit seinem detaillierten Aufbau aus Anodenfolien 6, Kathodenfolien 7 und dazwischen angeordneten Separatoren 8.

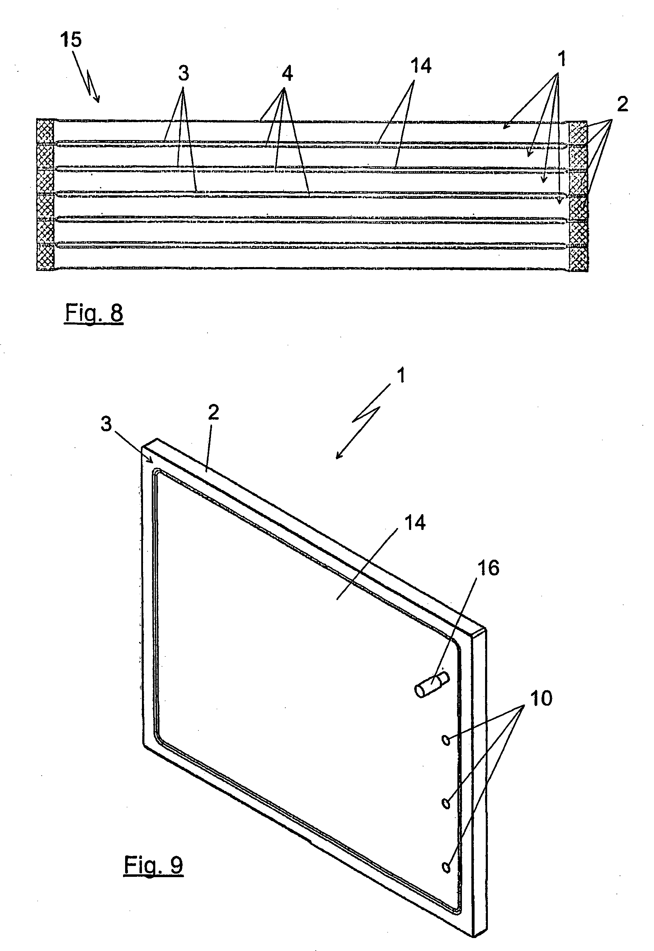

Bei herkömmlichen Hüllblechen 3, 4 gemäß dem Stand der Technik, welche vollkommen plan in Stapelrichtung der Batterieeinzelzellen 2 ausgeführt sind, kann es durch die Materialaufwürfe im Bereich der Schweißpunkte 10 nun zu einer entsprechenden Verformung oder zu einer lediglich punktuellen Berührung der Hüllbleche 3, 4 der benachbarten Batterieeinzelzellen 2 kommen. Dies wird bei dem hier dargestellten Aufbau dadurch vermieden, dass die Hüllbleche 3, 4 im Bereich, in dem die Schweißstellen 10 angeordnet werden, gegenüber ihren am weitesten den benachbarten Batterieeinzelzellen 1 zugewandten Bereich zurückversetzt werden. Dies kann beispielsweise durch ein entsprechendes Einprägen der Hüllbleche 3, 4 in den innerhalb des Rahmens 2 liegenden Bereich erfolgen. Diese zurückversetzten Bereiche 14 innerhalb des Rahmens 2 sind dabei in den Figuren 1, 2, 3, 4 und 7 bereits zu erkennen. Werden die Batterieeinzelzellen 1 nun entsprechend zu der Gesamtbatterie gestapelt, so entsteht ein Stapel 15 an Batterieeinzelzellen 1, wie er in der Figur 8 in einem Abschnitt beispielhaft dargestellt ist. Die Batterieeinzelzellen 1 der Figur 8 sind dabei zur Vereinfachung der Darstellung ohne das Innere der Batterieeinzelzellen 1 sowie ohne die Schweißstellen 10 dargestellt. Es ist jedoch deutlich zu erkennen, dass die Hüllbleche 3, 4 der jeweils benachbarten Batterieeinzelzellen 1 sich im Bereich des Rahmens 2 entsprechend berühren. Da auf der einen Seite der Batterieeinzelzelle 1 das Anodenblech 3 und auf der anderen Seite das Kathodenblech 4 angeordnet ist, entsteht so ein serielle elektrische Verschaltung der Batterieeinzelzellen 1 untereinander in dem Stapel 15. Aufgrund der im Bereich des Rahmens 2 nicht zurückversetzt ausgebildeten Hüllbleche 3, 4 kommt es zumindest in diesem Bereich zur gewünschten elektrischen Kontaktierung beim Stapeln der Batterieeinzelzellen 1.

Wie es aus der Darstellung der Figur 8 weiter zu erkennen ist, kommt es in dem Bereich 14 , in dem die Hüllbleche 3, 4 entsprechend zurückversetzt sind, zu einem Luftspalt zwischen den jeweiligen zurückversetzten Bereichen 14 der Hüllbleche 3, 4. Dadurch kann in diesem zurückversetzten Bereich 14, in dem auch die Schweißstellen 10 angeordnet sind, ein entsprechender Materialaufwurf beim Schweißen auftreten, ohne dass dieser nach dem Stapeln in unmittelbaren Kontakt mit dem gegenüberliegenden Hüllblech 3, 4 kommt. Durch diese einfache Maßnahme, bei dem die Hüllbleche 3, 4 entsprechend zurückversetzt werden, entsteht also ein einfacher Aufbau der Batterieeinzelzellen 1. Diese Batterieeinzelzellen 1 können dann problemlos zu dem Stapel 15 gestapelt werden, sodass Batterien mit den bipolaren Batterieeinzelzellen 1 entsprechend kostengünstig und einfach hergestellt werden können.

Die Darstellung in der Figur 9 zeigt nun eine alternative Ausführungsform, bei der anstelle des Ultraschallschweißens ein Widerstands-Pressschweißverfahren tritt. Dieses landläufig auch als Punktschweißen bezeichnete Verfahren nutzt im Wesentlichen zwei Elektroden 16, von denen hier nur eine beispielhaft angedeutet ist. Die zu verschweißenden Bauteile 3, 9 werden zwischen diese beiden Elektroden 16 eingespannt und ein entsprechender Strom fließt durch die Elektroden 16 und schmilzt die eingespannten Materialien auf, sodass diese miteinander verschweißen können. Die Elektroden 16 werden dann wieder von den zu verschweißenden Bauteilen abgenommen. Auch diese Art des Punktschweißens hinterlässt typischerweise entsprechende Schweißstellen 10, in diesem Fall Schweißpunkte. Im Bereich der Schweißpunkte kommt es ebenfalls zu Materialaufwerfungen sowie zu einem eventuellen Zurückbleiben von Material der Schweißelektroden 16, welche sich beim Schweißen, dadurch, dass sie ebenfalls erwärmt werden, entsprechend verschleißen. Diese Materialaufwerfungen oder das zurückgebliebene Material der Elektroden 16 ist ebenfalls kritisch hinsichtlich der Ebenheit der Hüllbleche und einer eventuellen unkontrollierten Berührung bzw. Nichtberührung der Hüllbleche 3, 4 untereinander. Damit gilt für das hier beispielhaft dargestellte Punktschweißen ähnliches, wie oben beim ausführlich beschriebenen Ultraschallschweißen bereits gesagt wurde. Dementsprechend ist der Aufbau der Hüllbleche 3, 4 auch hier mit zurückversetztem Bereich 14 innerhalb des Rahmens 2 ausgeführt.

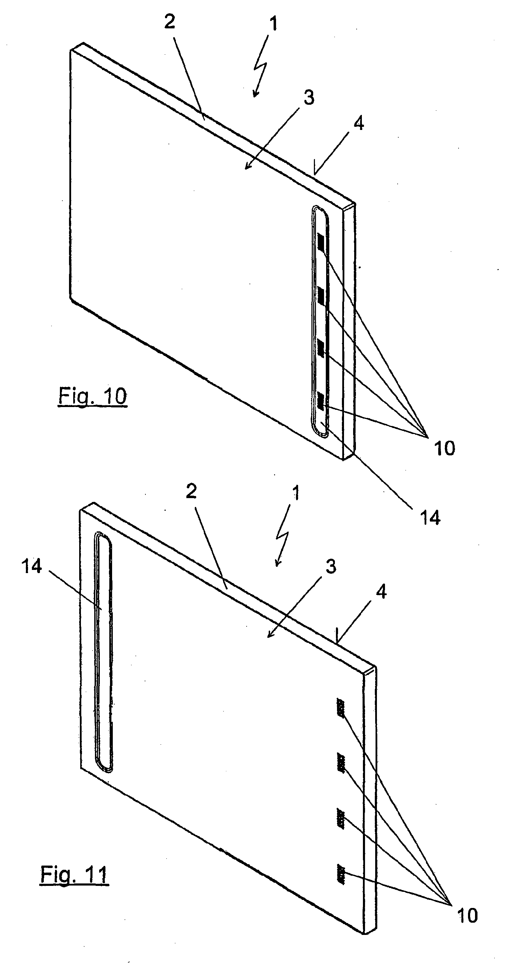

In der Darstellung der Figur 10 ist nun ein weiterer alternativer Aufbau dargestellt. Auch hier ist beispielhaft wieder ein Verschweißen über Ultraschallschweißen angenommen, wie es durch die Ausgestaltung der Schweißstellen 10 zu erkennen ist. Anstelle eines innerhalb des Rahmens 2 insgesamt zurückversetzten Hüllblechs 3 weist das Hüllblech 3 hier lediglich um die der Schweißstellen 10 einen partiell zurückversetzten Bereich 14 auf. Damit wird insgesamt nur eine kleinere Fläche des Hüllblechs 3, beispielsweise durch Prägen, zurückversetzt, um die Schweißstellen 10 entsprechend aufzunehmen. Damit kann beim Stapeln der Batterieeinzelzellen 1 eine vergleichbare vorteilhafte Ausgestaltung des Zellenstapels 15 erreicht werden, bei dem die Schweißstellen 10 das gegenüberliegende Hüllblech 4 ebenfalls nicht berühren. Dennoch kann eine vergleichsweise große Anlagefläche der Hüllbleche 3, 4 aneinander und damit eine entsprechend gute elektrische Kontaktierung der Batterieeinzelzellen 1 erreicht werden. Das gegenüberliegende Hüllblech kann dabei im Bereich der Schweißstellen 10 des Hüllblechs 3 ebenfalls einen partiell zurückversetzten Bereich 14 aufweisen, bei ausreichender Tiefe des zurückversetzten Bereichs 14 in dem einen Hüllblech 3 kann dieses jedoch auch vollkommen plan ausgebildet sein.

In Figur 11 ist eine weitere mögliche Ausführungsform der Batterieeinzelzelle 1 dargestellt. Das hier dargestellte Hüllblech 3 weist den partiell zurückversetzten Bereich 14 auf, welche jedoch nicht im Bereich der auf dem Hüllblech angeordneten Schweißstellen 10 liegt. Vielmehr sind diese Schweißstellen 10 selbst auf einem ebenen, nicht zurückversetzten Bereich des Hüllblechs 3 ausgebildet. Wird der Aufbau des Zellenstapels 14 nun entsprechend gestapelt, so kommt das hier vorne liegende erste Hüllblech 3 mit dem zweiten auf der anderen Seite des Rahmens 2 liegenden Hüllblech 4 in Kontakt. Wenn dieses Hüllblech 4 vergleichbar ausgebildet ist, bedeutet dies, dass in der Darstellung der Figur 11 in dem zweiten Hüllblech 4 gegenüber des Bereichs 14, welcher hier zurückversetzt ist, auf dem planen Hüllblech 3 die entsprechenden Schweißstellen 10 angeordnet sind. Gegenüber der hier zu erkennenden Schweißstellen 10 auf dem ersten Hüllblech 3 ist in dem zweiten Hüllblech 4 dementsprechend der zurückversetzte Bereich 14 ausgebildet. Damit liegt nach dem Stapeln der Batterieeinzelzellen 1 zu dem Zellenstapel 15 jeweils ein Bereich mit den Schweißstellen 10 auf dem ebenen Bereich des Hüllblechs 3, 4 über einem zurückversetzten Bereich 14 des benachbarten Hüllblechs 4, 3.

Die Ausgestaltung der Hüllbleche 3,4 gemäß Figur 11 ist besonders günstig, da sie den Bauraum im Inneren der Batterieeinzelzelle 1 ideal ausnutzt. Die Bereiche mit den Schweißstellen 10 sind plan ausgebildet, so dass hier keine Verformung der Anschlussbereiche 9 des Elektrodenstapels 5 notwendig ist. Auch sind die Hüllbleche im Bereich des Elektrodenstapels 5 plan ausgeführt, dadurch kann der Elektrodenstapel 5 selbst mit maximaler Bauhöhe ausgeführt werden. Lediglich in dem Bereich, welcher dem Anschlussbereich 9 des Elektrodenstapels 5 mit den einen der Hüllbleche 3, 4 jeweils gegenüber liegt ist das jeweils andere der Hüllbleche 4, 3 mit dem partiell zurückversetzten Bereich 14 versehen. In diesem Bereich ist jedoch das Innere der Batterieeinzelzelle 1 ohnehin leer bzw. mit Elektrolyt gefüllt. Der partiell zurückversetzte Bereich 14 benötigt also keinen Bauraum, welcher auch anders genutzt werden könnte.

Vielmehr reduziert er das freie Volumen, welches ansonsten mit dem Elektrolyt befüllt werden müsste. Da der Elektrolyt ohnehin in ausreichender Menge vorhanden ist, hat dies den zusätzlichen Vorteil, dass sogar Elektrolyt eingespart werden kann.

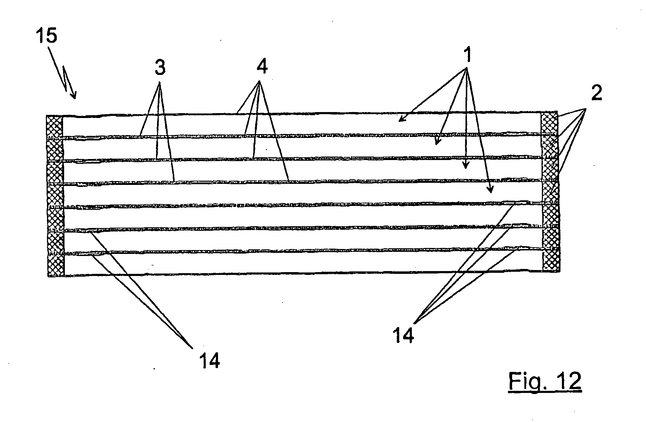

Der Aufbau mit den Hüllblechen 3, 4 gemäß Figur 10 oder 11 ist mit dem Stapel 15 der Batterieeinzellen 1 in Figur 12 nochmals zu erkennen, wobei für die Darstellung der Figur 12 ansonsten das im Rahmen der Beschreibung der Figur 8 bereits gesagte analog gilt.

## Patentansprüche

1. Batterie, mit einem Stapel von bipolaren Batterieeinzelzellen, wobei jede der Batterieeinzelzellen einen Elektrodenstapel und zwei die Batterieeinzelzelle zumindest in Stapelrichtung begrenzende Hüllbleche aufweist, wobei der Elektrodenstapel zumindest mit einem der Hüllbleche über wenigstens eine Schweißstelle verbunden ist,
**dadurch gekennzeichnet, dass**
im Bereich der Schweißstellen (10) das mit dem Elektrodenstapel (5) verschweißte Hüllblech (3, 4) und/oder das an diesem Hüllblech (3, 4) anliegende Hüllblech (4, 3) der benachbarten Batterieeinzelzelle (1) zurückversetzt ausgebildet ist, sodass die Hüllbleche (3, 4) der benachbarten Batterieeinzelzellen (1) sich im Bereich der wenigstens einen Schweißstelle (10) nicht berühren.

2. Batterie nach Anspruch 1,
**dadurch gekennzeichnet, dass**
das mit dem Elektrodenstapel (5) verschweißte Hüllblech (3, 4) im Bereich der wenigstens einen Schweißstelle (10) partiell zurückversetzt ausgebildet ist.

3. Batterie nach Anspruch 1 oder 2,
**dadurch gekennzeichnet, dass**
das an dem mit dem Elektrodenstapel (5) verschweißten Hüllblech (3, 4) anliegende Hüllblech (4, 3) der benachbarten Batterieeinzelzelle (1) im Bereich in Stapelrichtung gegenüber der wenigstens einen Schweißstelle (10) partiell zurückversetzt ausgebildet ist.

4. Batterie nach Anspruch 1,
**dadurch gekennzeichnet, dass**
zwischen den Hüllblechen (3, 4) ein Rahmen (2) angeordnet ist, welcher den Elektrodenstapel (5) quer zur Stapelrichtung umschließt.

5. Batterie nach Anspruch 4,
**dadurch gekennzeichnet, dass**
das mit dem Elektrodenstapel (5) verschweißte Hüllblech (3, 4) in seinem innerhalb des Rahmens (2) liegenden Bereich zurückversetzt ist.

6. Batterie nach Anspruch 4 oder 5,
**dadurch gekennzeichnet, dass**
das an dem mit dem Elektrodenstapel (5) verschweißten Hüllblech (3, 4) anliegende Hüllblech (4, 3) in seinen innerhalb des Rahmens (2) liegenden Bereich zurückversetzt ist.

7. Batterie nach einem der Ansprüche 1 bis 6,
**dadurch gekennzeichnet, dass**
die Hüllbleche (3, 4) und der Elektrodenstapel (5) über Pressschweißverfahren miteinander verschweißt sind.

8. Batterie nach Anspruch 7,
**dadurch gekennzeichnet, dass**
die Hüllbleche (3, 4) und der Elektrodenstapel (5) über Ultraschallschweißverfahren miteinander verschweißt sind.

9. Batterie nach Anspruch 7,
**dadurch gekennzeichnet, dass**
die Hüllbleche (3, 4) und der Elektrodenstapel (5) über Widerstands-Pressschweißverfahren miteinander verschweißt sind.

10. Batterie nach einem der Ansprüche 1 bis 9,
**dadurch gekennzeichnet, dass**
die Batterieeinzellen (1) in Lithium-lonen-Technologie ausgeführt sind.

## Claims

1. Battery, comprising a stack of bipolar individual battery cells, wherein each of the individual battery cells comprises an electrode stack and two cover plates which bound the individual battery cell at least in the stacking direction, the electrode stack being connected to at least one of the cover plates via at least one weld junction,
**characterised in that**
in the region of the weld junctions (10), the cover plate (3, 4) welded to the electrode stack (5) and/or the cover plate (4, 3) of the adjacent individual battery cell (1), which adjoins the cover plate (3, 4), is/are offset backwards, so that the cover plates (3, 4) of the adjacent individual battery cells (1) do not touch one another in the region of the at least one weld junction (10).

2. Battery according to claim 1,
**characterised in that**
the cover plate (3, 4) welded to the electrode stack (5) is partially offset backwards in the region of the at least one weld junction (10).

3. Battery according to claim 1 or 2,
**characterised in that**
the cover plate (4, 3) of the adjacent individual battery cell (1), which adjoins the cover plate (3, 4) welded to the electrode stack (5), is partially offset backwards against the at least one weld junction (10) in the region of the stacking direction.

4. Battery according to claim 1,
**characterised in that**
a frame (2) which encloses the electrode stack (5) perpendicular to the stacking direction is provided between the cover plates (3, 4).

5. Battery according to claim 4,
**characterised in that**
the cover plate (3, 4) welded to the electrode stack (5) is offset backwards in the region lying within the frame (2).

6. Battery according to claim 4 or 5,
**characterised in that**
the cover plate (4, 3), which adjoins the cover plate (3, 4) welded to the electrode stack (5), is offset backwards in the region lying within the frame (2).

7. Battery according to any of claims 1 to 6,
**characterised in that**
the cover plates (3, 4) and the electrode stack (5) are welded to one another in a pressure welding process.

8. Battery according to claim 7,
**characterised in that**
the cover plates (3, 4) and the electrode stack (5) are welded to one another in an ultrasonic welding process.

9. Battery according to claim 7,
**characterised in that**
the cover plates (3, 4) and the electrode stack (5) are welded to one another in a pressure resistance welding process.

10. Battery according to any of claims 1 to 9,
**characterised in that**
the individual battery cells (1) are produced using lithium ion technology.

## Revendications

1. Batterie dotée d'un empilement d'éléments de batterie individuels bipolaires, chacun des éléments de batterie individuels présentant un empilement d'électrodes et deux tôles enveloppantes limitant l'élément de batterie individuel au moins dans le sens d'empilement, l'empilement d'électrodes étant relié à l'au moins une des tôles enveloppantes par au moins une zone de soudure, **caractérisée en ce que** dans la zone de soudure (10) la tôle enveloppante (3, 4) soudée à l'empilement d'électrodes (5) et/ou la tôle enveloppante (4, 3) de l'élément de batterie individuel (1) voisin adjacente à ladite tôle enveloppante (3,4) est décalée, de telle sorte que les tôles enveloppantes (3, 4) des éléments de batterie individuels (1) voisins n'entrent pas en contact dans la zone d'au moins l'une zone de soudure (10).

2. Batterie selon la revendication 1, **caractérisée en ce que** la tôle enveloppante (3, 4) soudée à l'empilement d'électrode (5) est en partie décalée dans la zone d'au moins l'une zone de soudure (10).

3. Batterie selon la revendication 1 ou la revendication 2, **caractérisée en ce que** la tôle enveloppante (4, 3) de l'élément de batterie individuel voisin (1) adjacente à la tôle enveloppante (3, 4) soudée à l'empilement d'électrode (5) est en partie décalée dans la zone dans le sens de l'empilement par rapport à au moins une zone de soudure (10).

4. Batterie selon la revendication 1, **caractérisée en ce qu'**entre les tôles enveloppantes (3, 4) est disposé un cadre (2), lequel renferme l'empilement d'électrodes (5) de manière transversale au sens d'empilement.

5. Batterie selon la revendication 4, **caractérisée en ce que** la tôle enveloppante (3, 4) soudée à l'empilement d'électrode (5) est décalée dans sa zone se trouvant à l'intérieur du cadre (2).

6. Batterie selon la revendication 4 ou la revendication 5, **caractérisée en ce que** la tôle enveloppante (4, 3) adjacente à la tôle enveloppante (3, 4) soudée à l'empilement d'électrode (5) est décalée dans sa zone se trouvant à l'intérieur du cadre (2).

7. Batterie selon l'une quelconque des revendications 1 à 6, **caractérisé en ce que** les tôles enveloppantes (3, 4) et l'empilement d'électrodes (5) sont soudés ensemble au moyen du procédé de soudage par pression.

8. Batterie selon la revendication 7, **caractérisée en ce que** les tôles enveloppantes (3, 4) et l'empilement d'électrodes (5) sont soudés ensemble au moyen du procédé de soudage par ultrasons.

9. Batterie selon la revendication 7, **caractérisée en ce que** les tôles enveloppantes (3, 4) et l'empilement d'électrodes (5) sont soudés ensemble au moyen du procédé de soudage par pression par résistance.

10. Batterie selon l'une quelconque des revendications 1 à 9, **caractérisée en ce que** les éléments de batterie individuels (1) sont conçus au moyen de la technologie lithium-ion.
